# EUROPEAN PATENT APPLICATION

(11) **EP 4 404 156 A1**
(43) Date of publication of application: **24.07.2024**
(21) Application number: 22891759.7
(22) Date of filing: 19.10.2022
(51) Int. Cl.: G07C 9/00

(54) **CONTROL METHOD AND DISPLAY DEVICE**

(30) Priority: 11.11.2021 CN 202111334461
(71) Applicant: Huawei Technologies Co., Ltd., Shenzhen, Guangdong 518129 (CN)
(72) Inventor: XUE, Qingfeng, Shenzhen, Guangdong 518129 (CN); XU, Xuejun, Shenzhen, Guangdong 518129 (CN)
(74) Representative: Gill Jennings & Every LLP
(86) International application number: PCT/CN2022/126262
(87) International publication number: WO 2023/082962

(57) **Abstract**

A control method is provided. After obtaining a control request sent by a first device (200), a display device (100) may display an interface for indicating a user to perform an operation and control, and in response to an operation of the user, find a second device (300) that is relatively close to the display device (100). Identity information of the user that is in a same environment as the display device (100) is collected by using the second device (300). Authentication is performed on the identity information by using a third device (400), to determine, based on an authentication result, whether to deliver a control instruction to the first device (200). Therefore, when controlling the first device (200), the user that is in a same environment as the display device (100) can also deliver the control instruction without paying attention to an identity of the second device (300) or account information on each device. This improves convenience and security of control.

## Description

This application claims priority to Chinese Patent Application No. 202111334461.9, filed with the China National Intellectual Property Administration on November 11, 2021 and entitled "CONTROL METHOD AND DISPLAY DEVICE", which is incorporated herein by reference in its entirety.

### TECHNICAL FIELD

This application relates to the field of terminal technologies, and in particular, to a control method and a display device.

### BACKGROUND

Currently, smart locks have gradually entered people's homes. A smart lock can interact with a device in a user's home, so that a person in the user's home determines whether to unlock the smart lock. However, currently, in a process of unlocking the smart lock, usually any person can operate to determine whether to unlock the lock. This leads to poor security of unlocking the smart lock.

### SUMMARY

This application provides a control method, a display device, a computer storage medium, and a computer program product, to improve convenience and security of control on a smart lock.

According to a first aspect, this application provides a control method, applied to a display device. The method includes: displaying a first interface in response to an obtained first request, where the first interface at least indicates a target user to deliver a control instruction to a first device, the target user and the display device are in a same environment, and the first request is sent by the first device and is used to request to control the first device; in response to a first control instruction delivered by the target user, determining a second device from an environment in which the display device is located; sending a first message to the second device, where the first message indicates the second device to obtain target identity information of the target user; sending a second request to a third device in response to the obtained target identity information sent by the second device, where the second request is used to request the third device to perform authentication on the target identity information; and in response to an obtained authentication result sent by the third device, when the authentication result indicates that authentication succeeds, sending the first control instruction to the first device.

In this way, after obtaining a control request sent by the first device, the display device may display an interface for indicating a user to perform an operation and control, and in response to an operation of the user, find the second device that is relatively close to the display device. Identity information of the user that is in a same environment as the display device is collected by using the second device. Authentication is performed on the identity information by using the third device, to determine, based on the authentication result, whether to deliver the control instruction to the first device. Therefore, when controlling the first device, the user that is in a same environment as the display device can also deliver the control instruction without paying attention to an identity of the second device or account information on each device. This improves convenience and security of control.

For example, the display device may be a smart television, the first device may be a smart lock, the second device may be a mobile terminal (for example, a mobile phone), and the third device may be an identity authentication device. The first request may be an unlock request, and the first control instruction may be an unlock instruction.

In a possible implementation, the first interface includes a first sub-interface and a second sub-interface. The first sub-interface is used to prompt the target user to perform a target operation. The second sub-interface indicates the target user to confirm to perform the target operation. The second sub-interface is an interface displayed after the target user performs the target operation on the first sub-interface.

In a possible implementation, the second sub-interface is a trusted user interface.

In a possible implementation, the second device is a device closest to the display device.

In a possible implementation, the first device is a smart lock, the second device is a mobile terminal, and the third device is an identity authentication device.

According to a second aspect, this application provides a control method, applied to a system including a display device, a first device, a second device, and a third device. The method includes: The first device sends a first request to the display device in response to an operation request of a first user, where the first request is used to control the first device. The display device displays a first interface in response to the obtained first request, where the first interface at least indicates a target user to deliver a control instruction to the first device, and the target user and the display device are in a same environment. The display device determines, in response to a first control instruction delivered by the target user, the second device from an environment in which the display device is located. The display device sends a first message to the second device, where the first message indicates the second device to obtain target identity information of the target user. The second device obtains the target identity information of the target user in response to the first message, and sends the target identity information to the display device. The display device sends a second request to the third device in response to the obtained target identity information, where the second request is used to request the third device to perform authentication on the target identity information. The third device performs authentication on the target identity information based on prestored identity information in response to the obtained second request, and sends an authentication result to the display device. The display device sends the first control instruction to the first device in response to the obtained authentication result when the authentication result indicates that authentication succeeds.

In a possible implementation, the first interface includes a first sub-interface and a second sub-interface. The first sub-interface is used to prompt the target user to perform a target operation. The second sub-interface indicates the target user to confirm to perform the target operation. The second sub-interface is an interface displayed after the target user performs the target operation on the first sub-interface.

In a possible implementation, the second sub-interface is a trusted user interface.

In a possible implementation, the second device is a device closest to the display device.

In a possible implementation, the first device is a smart lock, the second device is a mobile terminal, and the third device is an identity authentication device.

According to a third aspect, this application provides a control method, applied to a display device. The method includes:
displaying a first interface in response to an obtained first request, where the first interface at least indicates a target user to deliver a control instruction to a first device, the target user and the display device are in a same environment, and the first request is sent by the first device and is used to request to control the first device;
in response to a first control instruction delivered by the target user, determining a second device from an environment in which the display device is located;
sending a first message to the second device, where the first message indicates the second device to obtain target identity information of the target user;
performing authentication on the target identity information in response to the obtained target identity information sent by the second device; and
when an authentication result indicates that authentication succeeds, sending the first control instruction to the first device.

In a possible implementation, the first interface includes a first sub-interface and a second sub-interface. The first sub-interface is used to prompt the target user to perform a target operation.

The second sub-interface indicates the target user to confirm to perform the target operation.

The second sub-interface is an interface displayed after the target user performs the target operation on the first sub-interface.

In a possible implementation, the second sub-interface is a trusted user interface.

In a possible implementation, the second device is a device closest to the display device.

In a possible implementation, the first device is smart lock, and the second device is a mobile terminal.

According to a fourth aspect, this application provides a display device, including: a display; at least one memory, configured to store a program; and at least one processor, configured to execute the program stored in the memory. When the program stored in the memory is executed, the processor is configured to perform the method provided in the first aspect or the third aspect.

According to a fifth aspect, this application provides a computer-readable storage medium. The computer-readable storage medium stores a computer program, and when the computer program is run on an electronic device, the electronic device is enabled to perform the method provided in the first aspect or the third aspect.

According to a sixth aspect, this application provides a computer program product. When the computer program product is run on an electronic device, the electronic device is enabled to perform the method provided in the first aspect or the third aspect.

It may be understood that, for beneficial effects of the second aspect to the sixth aspect, refer to related descriptions in the first aspect. Details are not described herein again.

### BRIEF DESCRIPTION OF DRAWINGS

FIG. 1 is a schematic diagram of an application scenario according to an embodiment of this application;
FIG. 2 is a schematic diagram of a hardware structure of a display device according to an embodiment of this application;
FIG. 3 is a schematic diagram of a hardware structure of a smart lock according to an embodiment of this application;
FIG. 4 is a schematic diagram of a hardware structure of a mobile terminal according to an embodiment of this application;
FIG. 5 is a schematic diagram of a hardware structure of an identity authentication device according to an embodiment of this application;
FIG. 6 is a schematic diagram of communication of a control method according to an embodiment of this application;
FIG. 7 is a schematic diagram of a display interface of a display device according to an embodiment of this application;
FIG. 8 is a schematic diagram of a display interface of a display device and switching of an interface on a chip of the display device according to an embodiment of this application;
FIG. 9 is a schematic diagram of communication of another control method according to an embodiment of this application; and
FIG. 10 is a schematic diagram of a structure of a control apparatus according to an embodiment of this application.

### DESCRIPTION OF EMBODIMENTS

To make the objectives, technical solutions, and advantages of embodiments of this application clearer, the following clearly and completely describes the technical solutions in embodiments of this application with reference to accompanying drawings in embodiments of this application. It is clear that the described embodiments are merely some rather than all of embodiments of this application. All other embodiments obtained by a person of ordinary skill in the art based on embodiments of this application without creative efforts shall fall within the protection scope of this application.

The term "and/or" in this specification describes an association relationship between associated objects and indicates that three relationships may exist. For example, A and/or B may indicate the following three cases: Only A exists, both A and B exist, and only B exists. The character "/" in this specification indicates an "or" relationship between the associated objects. For example, A/B indicates A or B.

In this specification and the claims of this specification, the terms "first", "second", and the like are intended to distinguish between different objects, but do not indicate a particular order of the objects. For example, a first response message, a second response message, and the like are intended to distinguish between different response messages, but do not indicate a particular order of the response messages.

In embodiments of this application, the term such as "example" or "for example" is used to represent giving an example, an illustration, or a description. Any embodiment or design scheme described by using "example" or "for example" in embodiments of this application should not be construed as being more preferred or advantageous than another embodiment or design scheme. To be precise, the term such as "example" or "for example" is intended to present a related concept in a specific manner.

In the descriptions of embodiments of this application, unless otherwise specified, "a plurality of" means two or more. For example, a plurality of processing units are two or more processing units, and a plurality of elements are two or more elements.

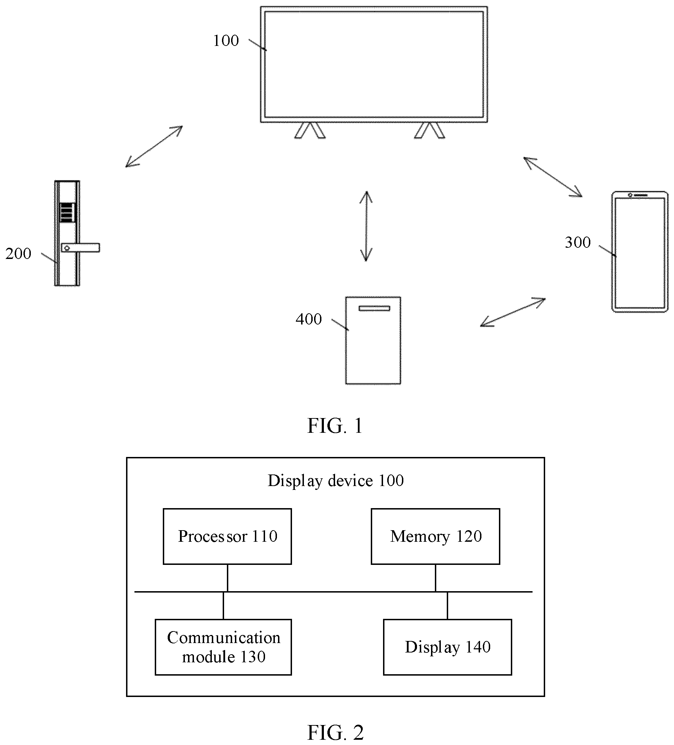

For example, FIG. 1 shows an application scenario. As shown in FIG. 1, the following devices are mainly used in this scenario: a display device 100, a smart lock 200, a mobile terminal 300, and an identity authentication device 400. After obtaining an unlock request sent by the smart lock 200, the display device 100 may display unlock information, request, from the mobile terminal 300, identity information indicating a user who unlocks, and send the identity information to the identity authentication device 400 for authentication. When the identity authentication device 400 succeeds in authentication on the identity information sent by the display device 100, the identity authentication device 400 may send authentication success information to the display device 100. After obtaining the authentication success information fed back by the identity authentication device 400, the display device 100 may send an unlock instruction to the smart lock 200. After obtaining the unlock instruction, the smart lock 200 performs an unlocking action.

In this embodiment of this application, the display device 100 may be connected to the smart lock 200 through a wireless network (wireless network), the display device 100 may be connected to the mobile terminal 300 through the wireless network, the display device 100 may be connected to the identity authentication device 400 through a wired network (wired network) or the wireless network, and the mobile terminal 300 may be connected to the identity authentication device 400 through the wired network or the wireless network. In an example, both the wired network and the wireless network may be local area networks (local area networks, LANs), or may be wide area networks (wide area networks, WANs) (for example, the Internet). Networks between different devices may be implemented by using any known network communication protocol. The network communication protocol may be various wired or wireless communication protocols, such as Ethernet, a universal serial bus (universal serial bus, USB), a firewire (firewire), a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), new radio (new radio, NR), Bluetooth (Bluetooth), and wireless fidelity (wireless fidelity, Wi-Fi). For example, the display device 100 and the smart lock 200 may communicate with each other through Bluetooth (Bluetooth), ultra wide band (ultra wide band, UWB), ZigBee, wireless fidelity (wireless fidelity, Wi-Fi), or the like. The display device 100 and the mobile terminal 300 may also communicate with each other through Bluetooth (Bluetooth), ultra wide band (ultra wide band, UWB), ZigBee, wireless fidelity (wireless fidelity, Wi-Fi), or the like. The display device 100 and the identity authentication device 400 may also communicate with each other through Bluetooth (Bluetooth), ultra wide band (ultra wide band, UWB), ZigBee, wireless fidelity (wireless fidelity, Wi-Fi), or the like.

In some embodiments of this application, the mobile terminal 300 and the identity authentication device 400 may directly or indirectly communicate with each other. For example, the mobile terminal 300 may communicate with the identity authentication device 400 through the display device 100. In this embodiment of this application, a communication manner between the mobile terminal 300 and the identity authentication device 400 is not limited.

In some embodiments of this application, the display device 100 may be a device having a display function, including but not limited to a smart television. The smart television in embodiments of this application may be a television that can interact with a mobile device such as a smartphone or a tablet computer or another electronic device having a large screen. For example, a user interface in the smartphone may be transmitted in a wireless manner and presented in the smart television, and an operation of a user in the smart television may also affect the smartphone. It may be understood that the display device 100 may alternatively be replaced with another device having a display function, for example, a display. A solution obtained after the replacement still falls within the protection scope of this application.

The smart lock 200 is an improved lock that is different from a conventional mechanical lock, and is more intelligent and more convenient in terms of user safety, identification, and management. For example, the smart lock 200 may include an image capture apparatus, for example, a camera, so that the smart lock 200 transmits an image of a person requesting to unlock to the display device 100. The image capture apparatus may be integrated into the smart lock 200, or may be separately disposed with the smart lock 200. This may be specifically determined based on an actual situation, and is not limited herein. It may be understood that, in this embodiment of this application, the smart lock 200 may alternatively be replaced with another electronic device that can be used only with user consent, for example, a notebook computer, a vehicle, a wearable device, or a smart home device. A solution obtained after the replacement still falls within the protection scope of this application.

The mobile terminal 300 may be a mobile phone, a tablet computer, a notebook computer, an ultra-mobile personal computer (ultra-mobile personal computer, UMPC), a netbook, a wearable device, a smart home device, or the like. A specific type of the mobile terminal 300 is not specially limited in this embodiment of this application.

The identity authentication device 400 is a device having an identity authentication function. The identity authentication device 400 may be integrated into the display device 100. That is, the identity authentication device 400 and the display device 100 belong to a same device, or the identity authentication device 400 and the display device 100 may be separately disposed. In an example, to avoid leakage of privacy data of a user, the identity authentication device 400 may be a device that is disposed in a home of the user, does not access the external Internet, and has an identity authentication function.

For example, FIG. 2 shows a hardware structure of a display device 100. As shown in FIG. 2, the display device 100 may include a processor 110, a memory 120, a communication module 130, and a display 140.

The processor 110 is a computing core and a control core of the display device 100. The processor 110 may include one or more processing units. For example, the processor 110 may include one or more of an application processor (application processor, AP), a modem (modem), a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be independent devices, or may be integrated into one or more processors.

The memory 120 may store a program, and the program may be run by the processor 110, to enable the processor 110 to perform at least the method performed by the display device 100 provided in embodiments of this application. The memory 120 may further store data. The processor 110 may read the data stored in the memory 120. The memory 120 and the processor 110 may be separately disposed. In addition, the memory 120 may alternatively be integrated into the processor 110.

The communication module 130 is mainly configured for communication between the display device 100 and another electronic device (for example, a smart lock 200, a mobile terminal 300, or an identity authentication device 400), to complete data exchange.

The display 140 may be configured to display an image, a video, and the like. The display 140 may include a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flexible light-emitting diode, FLED), a mini-LED, a micro-LED, a micro-OLED, a quantum dot light emitting diode (quantum dot light emitting diode, QLED), or the like. In some embodiments, the display 140 may be further configured to display, after the display device 100 obtains an unlock request of the smart lock 200, information about a user that requests to unlock, for example, a face image of the user.

It may be understood that the structure shown in this embodiment of this application does not constitute a specific limitation on the display device 100. In some other embodiments of this application, the display device 100 may include more or fewer components than those shown in the figure, or some components may be combined, or some components may be split, or there may be a different component arrangement. The components shown in the figure may be implemented in hardware, software, or a combination of software and hardware.

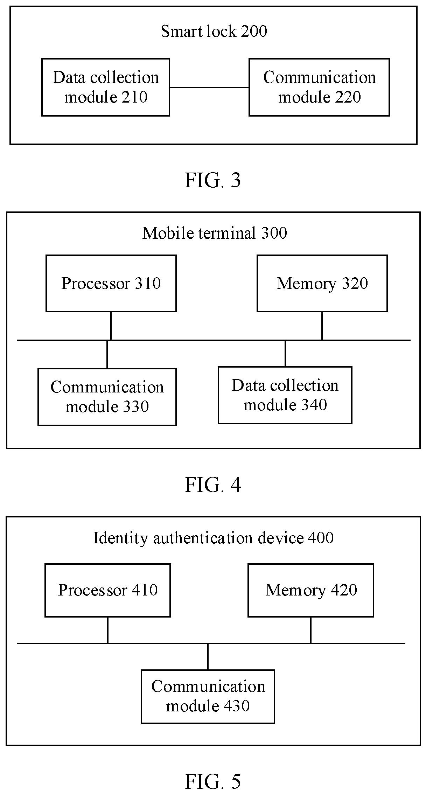

For example, FIG. 3 shows a hardware structure of a smart lock 200. As shown in FIG. 3, the smart lock 200 may include a data collection module 210 and a communication module 220.

The data collection module 210 may be configured to collect information entered by a user, for example, an unlock request. In some embodiments, the data collection module 210 may be further configured to collect image information of the user.

The communication module 220 is mainly configured for communication between the smart lock 200 and another electronic device (for example, a display device 100), to complete data exchange. For example, after the data collection module 210 collects the unlock request entered by the user, the smart lock 200 may send the unlock request to the display device 100 by using the communication module 220, and obtain an unlock instruction or an unlock prohibition instruction sent by the display device 100.

It may be understood that the structure shown in this embodiment of this application does not constitute a specific limitation on the smart lock 200. In some other embodiments of this application, the smart lock 200 may include more or fewer components than those shown in the figure, or some components may be combined, or some components may be split, or there may be a different component arrangement. The components shown in the figure may be implemented in hardware, software, or a combination of software and hardware.

For example, FIG. 4 shows a hardware structure of a mobile terminal 300. As shown in FIG. 4, the mobile terminal 300 may include a processor 310, a memory 320, a communication module 330, and a data collection module 340.

The processor 310 is a computing core and a control core of the mobile terminal 300. The processor 310 may include one or more processing units. For example, the processor 310 may include one or more of an application processor (application processor, AP), a modem (modem), a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be independent devices, or may be integrated into one or more processors.

The memory 320 may store a program, and the program may be run by the processor 310, to enable the processor 310 to perform at least the method performed by the mobile terminal 300 provided in embodiments of this application. The memory 320 may further store data. The processor 310 may read the data stored in the memory 320. The memory 320 and the processor 310 may be separately disposed. In addition, the memory 320 may alternatively be integrated into the processor 310.

The communication module 330 is mainly configured for communication between the mobile terminal 300 and another electronic device (for example, a display device 100 or an identity authentication device 400), to complete data exchange.

The data collection module 340 may be configured to: when the mobile terminal 300 obtains, by using the communication module 330, a request sent by the display device 100 for obtaining identity information indicating a user who unlocks, collect the identity information of the user; and when the user configures various data, collect the identity information of the user. Therefore, the identity authentication device 400 can obtain the identity information configured by the user, and perform authentication on an identity of the user based on the identity information.

It may be understood that the structure shown in this embodiment of this application does not constitute a specific limitation on the mobile terminal 300. In some other embodiments of this application, the mobile terminal 300 may include more or fewer components than those shown in the figure, or some components may be combined, or some components may be split, or there may be a different component arrangement. The components shown in the figure may be implemented in hardware, software, or a combination of software and hardware.

For example, FIG. 5 shows a hardware structure of an identity authentication device 400. As shown in FIG. 4, the identity authentication device 400 may include a processor 410, a memory 420, and a communication module 430.

The processor 410 is a computing core and a control core of the identity authentication device 400. The processor 410 may include one or more processing units. For example, the processor 410 may include one or more of an application processor (application processor, AP), a modem (modem), a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be independent devices, or may be integrated into one or more processors.

The memory 420 may store a program, and the program may be run by the processor 410, to enable the processor 410 to perform at least the method performed by the identity authentication device 400 provided in embodiments of this application. The memory 420 may further store data. The processor 410 may read the data stored in the memory 420. The memory 420 and the processor 410 may be separately disposed. In addition, the memory 420 may alternatively be integrated into the processor 410. For example, the memory 420 may be configured to store identity information preconfigured by a user.

The communication module 430 is mainly configured for communication between the identity authentication device 400 and another electronic device (for example, a display device 100 or a mobile terminal 300), to complete data exchange.

It may be understood that the structure shown in this embodiment of this application does not constitute a specific limitation on the identity authentication device 400. In some other embodiments of this application, the identity authentication device 400 may include more or fewer components than those shown in the figure, or some components may be combined, or some components may be split, or there may be a different component arrangement. The components shown in the figure may be implemented in hardware, software, or a combination of software and hardware.

The following describes a control method in embodiments of this application based on the content described above.

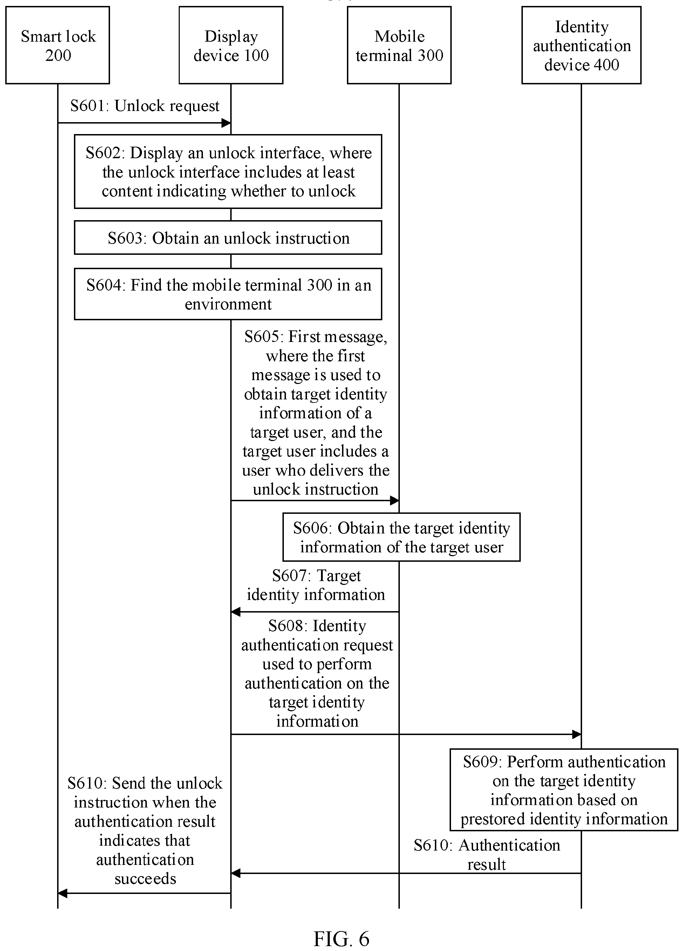

For example, FIG. 6 is a schematic diagram of communication of a control method. Hardware devices mainly used in FIG. 6 include a display device 100, a smart lock 200, a mobile terminal 300, and an identity authentication device 400. The smart lock 200 may alternatively be replaced with another device. When the smart lock 200 is replaced with another device, a name of a corresponding request and a name of a corresponding control instruction in FIG. 6 may also be adaptively replaced. For ease of description, the following mainly uses the smart lock 200 as an example for description. As shown in FIG. 6, the control method may include the following steps.

S601: The smart lock 200 sends an unlock request to the display device 100.

Specifically, after obtaining an unlock requirement, the smart lock 200 may send the unlock request to the display device 100.

S602: The display device 100 displays an unlock interface, where the unlock interface includes at least content indicating whether to unlock.

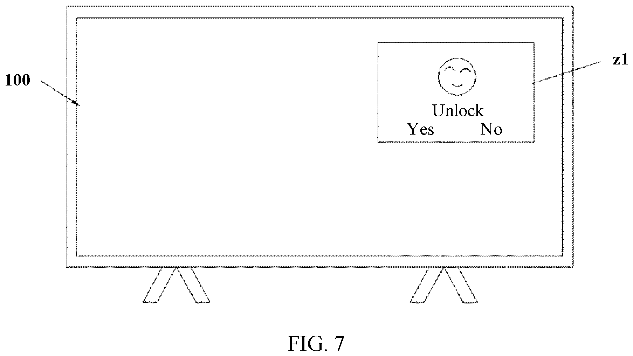

Specifically, after obtaining the unlock request, the display device 100 may display the unlock interface on a display interface of the display device 100. The unlock interface includes at least the content indicating whether to unlock, and the content mainly allows a user to choose whether to agree to unlock. In an example, when an image capture apparatus matching the smart lock 200 captures an image of a user having an unlock requirement, and the display device 100 obtains the image, the display device 100 may also display the image. In this way, a user that is in a same environment as the display device 100 chooses whether to agree to unlock. For example, as shown in FIG. 7, the display device 100 may display the unlock interface in an area z1 on a display of the display device 100. In this way, the user may choose whether to unlock. In addition, still refer to FIG. 7. The image of the user that is captured by the image capture apparatus matching the smart lock 200 may be further displayed in the area zl. In this way, the user that is in a same environment as the display device 100 learns of an identity of the user that currently has an unlock requirement, and then determines whether to unlock.

S603: The display device 100 obtains an unlock instruction.

Specifically, after the display device 100 displays the unlock interface, the user that is in a same environment (for example, indoor) as the display device may deliver an unlock instruction. The user that is in a same environment (for example, indoor) as the display device may deliver the unlock instruction in, but not limited to, a voice manner, a key manner, or the like.

S604: The display device 100 determines the mobile terminal 300 from n devices in the environment, where n is a positive integer greater than or equal to 1.

Specifically, after obtaining the unlock instruction, the display device 100 may discover devices in the environment by using a discovery mechanism of a software bus, and select the mobile terminal 300 from the n devices in the environment. For example, the mobile terminal 300 may be a device closest to the display device 100.

In a possible implementation, after obtaining the unlock instruction, the display device 100 may start device scanning, and select the mobile terminal 300 from the n devices that are in a same environment as the display device 100. In an example, the display device 100 may perform device scanning in a first near field communication manner. For example, the first near field communication manner may be a peer to peer (peer to peer, P2P) communication manner, a Bluetooth communication manner, or the like.

Further, after performing device scanning, the display device 100 may select, from the n devices based on wireless communication signal strength between the display device 100 and the n devices in the environment, the mobile terminal 300 closest to the display device 100. When two devices are closest to each other, wireless communication signal strength between the two devices is the strongest. Therefore, the display device 100 may select a device that has the strongest wireless communication signal strength during wireless communication with the display device 100 as the mobile terminal 300.

S605: The display device 100 sends a first message to the mobile terminal 300, where the first message is used to obtain target identity information of a target user, and the target user includes the user who delivers the unlock instruction.

Specifically, after determining the mobile terminal 300, the display device may send, to the mobile terminal 300, a message used to obtain the target identity information of the user who delivers the unlock instruction.

S606: The mobile terminal 300 obtains the target identity information of the target user.

Specifically, after obtaining the first message sent by the display device 100, the mobile terminal 300 may obtain the target identity information of the target user. For example, the target identity information may include but is not limited to biometric feature information of the target user, for example, a fingerprint, a sound, or a face image.

In some embodiments of this application, after obtaining the first message, the mobile terminal 300 may display, on a display interface of the mobile terminal 300, content that is about whether to collect user identity information and that is for the user to select, and notify that collection of the user identity information is for determining whether to unlock the smart lock 200, and the like. After the user agrees to collect the user identity information, the mobile terminal 300 may collect the user identity information by using a data collection apparatus on the mobile terminal 300.

S607: The mobile terminal 300 sends the target identity information of the target user to the display device 100.

Specifically, after obtaining the target identity information, the mobile terminal 300 may send the target identity information to the display device 100.

S608: The display device 100 sends, to the identity authentication device 400, an identity authentication request used to perform authentication on the target identity information.

Specifically, after obtaining the target identity information sent by the mobile terminal 300, the display device 100 may send, to the identity authentication device 400, the identity authentication request used to perform authentication on the target identity information, so that the identity authentication device 400 performs authentication on the target identity information.

S609: The identity authentication device 400 performs authentication on the target identity information based on prestored identity information.

Specifically, the identity authentication device 400 may prestore identity information configured by the user. After obtaining the identity authentication request, the identity authentication device 400 may compare the target identity information included in the identity authentication request with the prestored identity information. When a similarity between the target identity information and any piece of identity information in the prestored identity information is greater than a preset similarity threshold, authentication succeeds. In this case, it indicates that the target identity information is trusted. Otherwise, authentication fails. In this case, it indicates that the target identity information is untrusted.

In some embodiments of this application, the mobile terminal 300 may directly or indirectly communicate with the identity authentication device 400 in advance, to prestore trusted user identity information collected by the mobile terminal 300 into the identity authentication device 400.

S610: The identity authentication device 400 sends an authentication result to the display device 100.

Specifically, after performing authentication on the target identity information, the identity authentication device 400 may send an authentication result to the display device 100. The authentication result may indicate that authentication succeeds or indicate that authentication fails.

S611: The display device 100 sends the unlock instruction to the smart lock 200 when the authentication result indicates that authentication succeeds.

Specifically, when the authentication result indicates that authentication succeeds, the display device 100 may send the unlock instruction to the smart lock 200. Then, the smart lock 200 executes the unlock instruction. It may be understood that, when the authentication result indicates that authentication fails, the display device 100 may send an unlock prohibition instruction to the smart lock 200, to prohibit unlocking the smart lock 200.

Therefore, according to the control method provided in this embodiment of this application, after the display device 100 obtains an unlock request, the display device 100 may find a mobile terminal that is relatively close to the display device 100; identity information of a user that is in a same environment as the display device 100 is collected by using the terminal; and authentication is performed on the identity information by using the identity authentication device 400, to determine, based on an authentication result, whether to deliver an unlock instruction. Therefore, when unlocking, the user that is in a same environment as the display device 100 can also deliver the unlock instruction without paying attention to an identity of the mobile terminal or account information on each device. This improves convenience of control.

It should be noted that, according to the control method provided in this embodiment of this application, when the display device does not need to transfer "Unlock" identity authentication to a mobile terminal, the display device does not need to consider which mobile terminal to transfer to, but directly selects a mobile terminal that is in a same environment as the display device, thereby increasing a use scope. For example, when it is necessary to consider transferring to a mobile phone that is logged in to a same account, the display device needs to consider to transfer to the same-account mobile phone when transferring the "Unlock" identity authentication to a mobile phone. In this way, the use scope is limited. For example, the display device is logged in to an account of a user A, but the user A is not at home. Only a user B is at home at this time. However, the display device does not transfer the "Unlock" identity authentication to a mobile phone of the user B, but needs to transfer to the mobile phone of the user A. In this case, the user B cannot autonomously choose whether to unlock, and the user A cannot determine whether it is safe to unlock at the moment. The control method provided in this embodiment of this application well resolves this problem, and improves convenience and security of unlocking.

In some embodiments of this application, two mutually isolated running environments, namely, a trusted execution environment (trusted execution environment, TEE) and a rich execution environment (rich execution environment, REE), may be configured in the display device 100. For example, hardware resources of the REE and the TEE may be isolated by using a TrustZone mechanism, and applications corresponding to the REE and the TEE may be isolated by using a virtualization technology. Data and work that can be accessed by the application corresponding to the TEE are strictly limited, so that a security level of the application corresponding to the TEE meets a specific security requirement. Therefore, the TEE may be considered as a secure execution environment. The REE is a running environment other than the TEE. Compared with the TEE, the REE may also be referred to as an insecure execution environment.

An application running in the TEE may become a trusted application (trusted application TA), and there may be one or more TAs. An interface of the TA may be referred to as a trusted user interface (trusted user interface, TUI). An application running in the REE may become a client application (client application CA), and there may be one or more CAs. An interface of the CA may be referred to as a user interface (user interface, TUI). The TA is a secure application corresponding to the CA, and is used to perform an input operation of sensitive information used in the CA. The TA running in the TEE may provide a security-related function or service for the CA in the REE or another TA in the TEE. A trusted operating system running in the TEE may provide a TEE internal interface for the TA, and the TA obtains security resources and access permission for services by using the TEE internal interface. These security resources and access permission include but are not limited to a trusted user interface TUI and the like. In an example, the display device 100 may deploy a Bluetooth dual protocol stack in the REE and the TEE, to implement smooth switching between the REE and the TEE by using the dual protocol stack, thereby achieving an objective of lossless service.

In this embodiment of this application, after displaying the unlock interface, the display device 100 may display a trusted user interface TUI corresponding to an unlock application when obtaining an operation instruction of the user. In this case, the display device 100 receives only an event in the TEE. In addition, an input of an uart interface of a chip at a bottom layer of the display device 100 may be directly switched to the TEE. In this way, when the user performs an operation (for example, an operation performed by using a remote control), an operation event may be directly transferred to the TEE for processing. Therefore, a tap event simulated on an REE side is disabled to trigger the unlock instruction. In addition, after unlocking ends, the display device 100 may control the TUI to disappear, and switch the input of the uart interface of the chip at the bottom layer of the display device 100 from the TEE to the REE, to restore the connection before a door is opened.

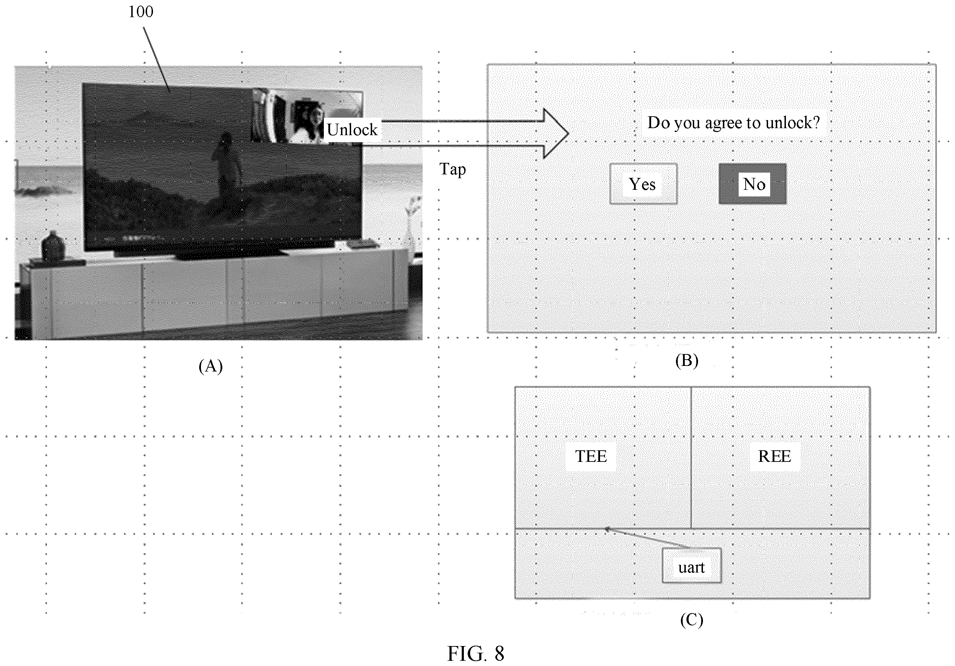

For example, as shown in (A) in FIG. 8, after obtaining the unlock request, the display device 100 may display an unlock interface. The unlock interface may include an "Unlock" button. After the user selects the "Unlock" button, as shown in (B) in FIG. 8, the display device 100 may display a trusted user interface TUI, and the user may choose whether to unlock in the trusted user interface TUI. In addition, as shown in (C) in FIG. 8, the input of the uart interface of the chip at the bottom layer of the display device 100 may be switched from the REE to the TEE. Therefore, the security of a user operation is improved. It may be understood that the trusted user interface TUI displayed by the display device 100 may be displayed in full screen, or may be displayed in a specific area. This may be specifically determined based on an actual situation, and is not limited herein.

In some embodiments of this application, the unlock interface displayed by the display device 100 in S602 may include two interfaces. One interface may be an interface displayed in an upper-left corner of the display device 100 in (A) in FIG. 8, and the interface may be used to prompt the user to unlock. The other interface may be an interface in (B) in FIG. 8, and the interface is a trusted user interface TUI for the user to choose whether to unlock.

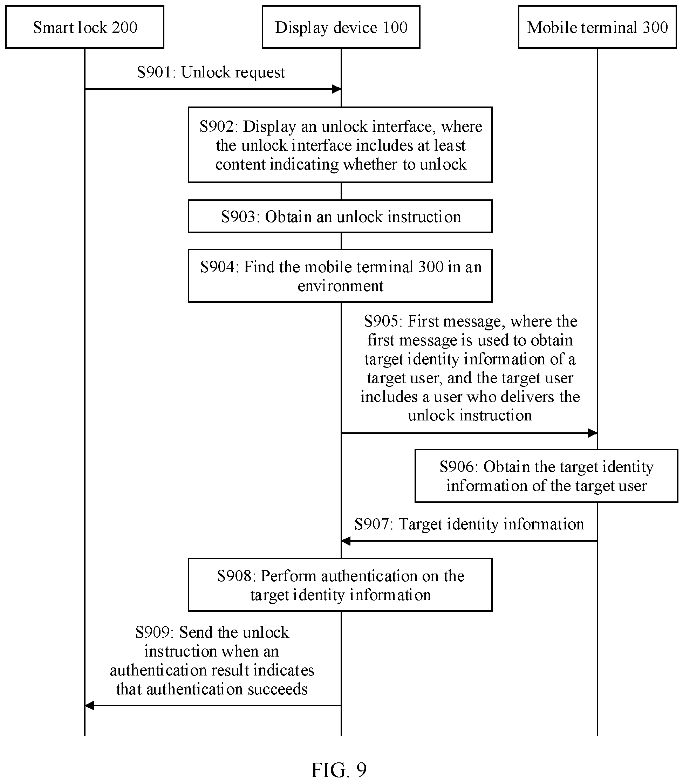

For example, FIG. 9 is a schematic diagram of communication of another control method. Hardware devices mainly used in FIG. 9 include a display device 100, a smart lock 200, and a mobile terminal 300. The smart lock 200 may alternatively be replaced with another device. When the smart lock 200 is replaced with another device, a name of a corresponding request and a name of a corresponding control instruction in FIG. 9 may also be adaptively replaced. For ease of description, the following mainly uses the smart lock 200 as an example for description. For content of S901 to S907 in FIG. 9, refer to the foregoing descriptions of S601 to S607 in FIG. 6. Details are not described herein again. As shown in FIG. 9, the control method may include the following steps.

S901: The smart lock 200 sends an unlock request to the display device 100.

S902: The display device 100 displays an unlock interface, where the unlock interface includes at least content indicating whether to unlock.

S903: The display device 100 obtains an unlock instruction.

S904: The display device 100 determines the mobile terminal 300 from n devices in the environment, where n is a positive integer greater than or equal to 1.

S905: The display device 100 sends a first message to the mobile terminal 300, where the first message is used to obtain target identity information of a target user, and the target user includes a user who delivers the unlock instruction.

S906: The mobile terminal 300 obtains the target identity information of the target user.

S907: The mobile terminal 300 sends the target identity information of the target user to the display device 100.

S908: The display device 100 performs authentication on the target identity information.

Specifically, after obtaining the target identity information sent by the mobile terminal 300, the display device 100 may perform authentication on the target identity information.

In a possible implementation, the display device 300 may prestore identity information configured by the user. The display device 300 compares the target identity information with the prestored identity information. When a similarity between the target identity information and any piece of identity information in the prestored identity information is greater than a preset similarity threshold, authentication succeeds. In this case, it indicates that the target identity information is trusted. Otherwise, authentication fails. In this case, it indicates that the target identity information is untrusted.

S909: When authentication succeeds, the display device 100 sends the unlock instruction to the smart lock 200.

Specifically, when authentication succeeds, the display device 100 may send the unlock instruction to the smart lock 200. Then, the smart lock 200 executes the unlock instruction. It may be understood that, when the display device 100 fails to authenticate, the display device 100 may send an unlock prohibition instruction to the smart lock 200, to prohibit unlocking the smart lock 200.

Therefore, according to the control method provided in this embodiment of this application, after obtaining an unlock request, the display device 100 may find a mobile terminal that is relatively close to the display device 100; identity information of a user that is in a same environment as the display device 100 is collected by using the terminal; and authentication is performed on the identity information, to determine, based on an authentication result, whether to deliver an unlock instruction. Therefore, when unlocking, the user that is in a same environment as the display device 100 can also deliver the unlock instruction without paying attention to an identity of the mobile terminal or account information on each device. This improves convenience of control.

It may be understood that the method provided in any embodiment of this application is performed by any apparatus, device, platform, or device cluster that has a computing capability and a processing capability. In addition, an order of performing the steps in any embodiment of this application may be adjusted based on an actual situation on the premise that there is no conflict, and an adjusted technical solution also falls within the scope of this application. In addition, the steps in any embodiment of this application may alternatively be selectively performed. This is not limited herein. Moreover, all or some of any feature in any embodiment of this application may be freely combined as required on the premise that there is no conflict, and a combined technical solution also falls within the protection scope of this application.

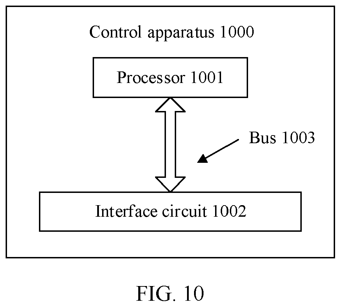

Based on the method in the foregoing embodiments, an embodiment of this application further provides a control apparatus. FIG. 10 is a schematic diagram of a structure of a control apparatus according to an embodiment of this application. As shown in FIG. 10, the control apparatus 1000 includes one or more processors 1001 and an interface circuit 1002. Optionally, the control apparatus 1000 may further include a bus 1003.

The processor 1001 may be an integrated circuit chip and has a signal processing capability. In an implementation process, steps in the foregoing methods can be implemented by using a hardware integrated logical circuit in the processor 1001, or by using instructions in a form of software. The processor 1001 may be a general-purpose processor, a digital communicator (DSP), an application-specific integrated circuit (ASIC), a field programmable gate array (FPGA) or another programmable logic device, a discrete gate or a transistor logic device, or a discrete hardware component. The processor 1001 may implement or perform the methods and steps disclosed in embodiments of this application. The general-purpose processor may be a microprocessor, or the processor may be any conventional processor, or the like. The interface circuit 1002 may send or receive data, instructions, or information. The processor 1001 may process the data, the instructions, or other information received through the interface circuit 1002, and send, through the interface circuit 1002, information obtained after processing.

Optionally, the control apparatus further includes a memory. The memory may include a read-only memory and a random access memory, and provides operation instructions and data for the processor. A part of the memory may further include a non-volatile random access memory (NVRAM). Optionally, the memory stores an executable software module or a data structure, and the processor may perform a corresponding operation by invoking operation instructions (the operation instructions may be stored in an operating system) stored in the memory.

Optionally, the interface circuit 1002 may be configured to output an execution result of the processor 1001.

It should be noted that functions corresponding to each of the processor 1001 and the interface circuit 1002 may be implemented by using a hardware design, may be implemented by using a software design, or may be implemented by using a combination of software and hardware. This is not limited herein.

It should be understood that the steps in the foregoing method embodiments may be completed by using a hardware logic circuit in a processor or by using instructions in a form of software. The control apparatus may be applied to any device in FIG. 1, to implement the method provided in embodiments of this application.

It may be understood that the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor, or may be any conventional processor.

The method steps in embodiments of this application may be implemented by hardware, or may be implemented by the processor executing software instructions. The software instructions may include corresponding software modules. The software modules may be stored in a random access memory (random access memory, RAM), a flash memory, a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), a register, a hard disk, a removable hard disk, a CD-ROM, or any other form of storage medium well-known in the art. For example, a storage medium is coupled to the processor, so that the processor can read information from the storage medium and write information into the storage medium. Certainly, the storage medium may be a component of the processor. The processor and the storage medium may be disposed in an ASIC.

All or some of the foregoing embodiments may be implemented by using software, hardware, firmware, or any combination thereof. When software is used to implement embodiments, all or some of the foregoing embodiments may be implemented in a form of a computer program product. The computer program product includes one or more computer instructions. When the computer program instructions are loaded and executed on a computer, all or some procedures or functions in embodiments of this application are generated. The computer may be a general-purpose computer, a dedicated computer, a computer network, or another programmable apparatus. The computer instructions may be stored in a computer-readable storage medium, or may be transmitted by using the computer-readable storage medium. The computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (solid state disk, SSD)), or the like.

It may be understood that various numbers in embodiments of this application are merely used for differentiation for ease of description, and are not used to limit the scope of embodiments of this application.

## Claims

1. A control method, applied to a display device, wherein the method comprises:
displaying a first interface in response to an obtained first request, wherein the first interface at least indicates a target user to deliver a control instruction to a first device, the target user and the display device are in a same environment, and the first request is sent by the first device and is used to request to control the first device;
in response to a first control instruction delivered by the target user, determining a second device from an environment in which the display device is located;
sending a first message to the second device, wherein the first message indicates the second device to obtain target identity information of the target user;
sending a second request to a third device in response to the obtained target identity information sent by the second device, wherein the second request is used to request the third device to perform authentication on the target identity information; and
in response to an obtained authentication result sent by the third device, when the authentication result indicates that authentication succeeds, sending the first control instruction to the first device.

2. The method according to claim 1, wherein the first interface comprises a first sub-interface and a second sub-interface, the first sub-interface is used to prompt the target user to perform a target operation, and the second sub-interface indicates the target user to confirm to perform the target operation; and
the second sub-interface is an interface displayed after the target user performs the target operation on the first sub-interface.

3. The method according to claim 2, wherein the second sub-interface is a trusted user interface.

4. The method according to any one of claims 1 to 3, wherein the second device is a device closest to the display device.

5. The method according to any one of claims 1 to 4, wherein the first device is a smart lock, the second device is a mobile terminal, and the third device is an identity authentication device.

6. A control method, applied to a system comprising a display device, a first device, a second device, and a third device, wherein the method comprises:
sending, by the first device, a first request to the display device in response to an operation request of a first user, wherein the first request is used to control the first device;
displaying, by the display device, a first interface in response to the obtained first request, wherein the first interface at least indicates a target user to deliver a control instruction to the first device, and the target user and the display device are in a same environment;
determining, by the display device in response to a first control instruction delivered by the target user, the second device from an environment in which the display device is located;
sending, by the display device, a first message to the second device, wherein the first message indicates the second device to obtain target identity information of the target user;
obtaining, by the second device, the target identity information of the target user in response to the first message, and sending the target identity information to the display device;
sending, by the display device, a second request to the third device in response to the obtained target identity information, wherein the second request is used to request the third device to perform authentication on the target identity information;
performing, by the third device, authentication on the target identity information based on prestored identity information in response to the obtained second request, and sending an authentication result to the display device; and
sending, by the display device, the first control instruction to the first device in response to the obtained authentication result when the authentication result indicates that authentication succeeds.

7. The method according to claim 6, wherein the first interface comprises a first sub-interface and a second sub-interface, the first sub-interface is used to prompt the target user to perform a target operation, and the second sub-interface indicates the target user to confirm to perform the target operation; and
the second sub-interface is an interface displayed after the target user performs the target operation on the first sub-interface.

8. The method according to claim 7, wherein the second sub-interface is a trusted user interface.

9. The method according to any one of claims 6 to 8, wherein the second device is a device closest to the display device.

10. The method according to any one of claims 6 to 9, wherein the first device is a smart lock, the second device is a mobile terminal, and the third device is an identity authentication device.

11. A control method, applied to a display device, wherein the method comprises:
displaying a first interface in response to an obtained first request, wherein the first interface at least indicates a target user to deliver a control instruction to a first device, the target user and the display device are in a same environment, and the first request is sent by the first device and is used to request to control the first device;
in response to a first control instruction delivered by the target user, determining a second device from an environment in which the display device is located;
sending a first message to the second device, wherein the first message indicates the second device to obtain target identity information of the target user;
performing authentication on the target identity information in response to the obtained target identity information sent by the second device; and
when an authentication result indicates that authentication succeeds, sending the first control instruction to the first device.

12. The method according to claim 11, wherein the first interface comprises a first sub-interface and a second sub-interface, the first sub-interface is used to prompt the target user to perform a target operation, and the second sub-interface indicates the target user to confirm to perform the target operation; and
the second sub-interface is an interface displayed after the target user performs the target operation on the first sub-interface.

13. The method according to claim 12, wherein the second sub-interface is a trusted user interface.

14. The method according to any one of claims 11 to 13, wherein the second device is a device closest to the display device.

15. The method according to any one of claims 11 to 14, wherein the first device is a smart lock, and the second device is a mobile terminal.

16. A display device, comprising:
a display;
at least one memory, configured to store a program; and
at least one processor, configured to execute the program stored in the memory, wherein when the program stored in the memory is executed, the processor is configured to: perform the method according to any one of claims 1 to 5, or perform the method according to any one of claims 11 to 15.

17. A computer-readable storage medium, wherein the computer-readable storage medium stores a computer program, and when the computer program is run on an electronic device, the electronic device is enabled to perform the method according to any one of claims 1 to 5, or perform the method according to any one of claims 11 to 15.

18. A computer program product, wherein when the computer program product is run on an electronic device, the electronic device is enabled to perform the method according to any one of claims 1 to 5, or perform the method according to any one of claims 11 to 15.
